(19) Europäisches Patentamt / European Patent Office / Office européen des brevets

(11) **EP 3 791 983 B1**

(12) **EUROPÄISCHE PATENTSCHRIFT**

(45) Veröffentlichungstag und Bekanntmachung des Hinweises auf die Patenterteilung:
**05.11.2025   Patentblatt 2025/45**

(21) Anmeldenummer: **20196450.9**

(22) Anmeldetag: **16.09.2020**

(51) Internationale Patentklassifikation (IPC):
***B23C 5/10*** *(2006.01)*

(52) Gemeinsame Patentklassifikation (CPC):
**B23C 5/10;** B23C 2210/084; B23C 2220/16;
B23C 2220/20; B23C 2265/08

(54) **FRÄSWERKZEUG**

MILLING TOOL

OUTIL DE FRAISAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **16.09.2019   DE 102019214041**

(43) Veröffentlichungstag der Anmeldung:
**17.03.2021   Patentblatt 2021/11**

(73) Patentinhaber: **Gühring KG**
**72458 Albstadt (DE)**

(72) Erfinder:
  • **Ehrler, Rolf**
    **79331 Teningen (DE)**
  • **Dallmann, Martin**
    **09112 Chemnitz (DE)**
  • **Ebel, Jakob**
    **72514 Inzigkofen (DE)**

(74) Vertreter: **Winter, Brandl - Partnerschaft mbB**
**Alois-Steinecker-Straße 22**
**85354 Freising (DE)**

(56) Entgegenhaltungen:
EP-A1- 2 093 003        WO-A1-2010/145801
WO-A1-2018/153896     CN-U- 208 019 493
JP-A- 2006 026 853      JP-A- H09 267 211
JP-U- 3 111 276

## Beschreibung

Technisches Gebiet

Die vorliegende Offenbarung betrifft ein Fräswerkzeug, insbesondere einen Fasfräser, gemäß dem Oberbegriff des Patentanspruchs 1. Derartige Werkzeuge sind in der Form von Schaftfräsern in verschiedener Ausgestaltung mit unterschiedlicher Schneidenanzahl und unterschiedlichem Schneidenverlauf im Einsatz.

Beispielsweise ist unter der Bezeichnung "TOGRON® Multi Chamfer" ein Fasfräser mit 5 in Drehrichtung spiralisiert konvex verlaufenden Stirnschneiden auf dem Markt. Ähnliche Fräswerkzeuge werden von den Firmen OSG Corporation vertrieben Allerdings ist das Einsatzgebiet dieser Fräswerkzeuge auf die Bearbeitung von relativ leicht zugänglichen runden und ebenen Fasflächen beschränkt.

Die Druckschrift JP 2006 026853 A offenbart ein Fräswerkzeug gemäß dem Oberbegriff des Anspruchs 1. Insbesondere offenbart die JP 2006 026853 A in ihren Figuren ein Fräswerkzeug mit einem zylindrischen Schaft und einem Schneidteil mit vier gerade verlaufenden Stirnschneiden. Die Stirnschneiden gehen an einem inneren Schneideneck in Zentrumsschneiden über, die auf einer Konusmantelfläche mit einem Spitzenwinkel von über 180° liegen und mit einem definierten Spanwinkel in einen im Fräserkern liegenden Bereich des Fräserzentrums laufen.

Ausgehend von der JP 2006 026853 A liegt der Erfindung liegt die Aufgabe zugrunde, ein gattungsbildendes Fräswerkzeug derart weiterzubilden, dass es ein stark erweitertes Einsatzgebiet hat und bei verbesserter Laufruhe ein erhöhtes Zeitspanvolumen sicherstellt und einfacher herzustellen ist.

Diese Aufgabe wird durch ein Fräswerkzeug mit den Merkmalen des Patentanspruchs 1 gelöst.

Neben dem spiralisierten Verlauf der Stirnschneiden, mit dem der Schnitt grundsätzlich weicher gemacht wird, besteht ein weiteres entscheidendes Merkmal des erfindungsgemäßen Fräswerkzeugs darin, dass die Stirnschneiden am radial inneren Schneideneck in Zentrumsschneiden übergehen, die auf einer Konusmantelfläche mit einem Spitzenwinkel von über 180° liegen und mit einem definierten positiven Spanwinkel in einen im Fräserkern liegenden Bereich des Fräserzentrums laufen. Damit wird zunächst einmal sichergestellt, dass die gesamte Länge der Stirnschneiden für den Zerspanungsprozess genutzt werden kann. Denn auch das radial innere Schneideneck ist damit Bestandteil der Stirnschneide. Weil die Zentrumsschneiden auf einer Konusmantelfläche mit einem Spitzenwinkel von über 180° liegen, entsteht eine Art Hohlschliff der Fräserspitze, der es erlaubt, auch Fasflächen an Werkstückkanten anzubringen, die sich in kleinstem Abstand zu einer Bodenfläche einer Nut befinden. Schließlich ist das Fräswerkzeug durch die Ausgestaltung der Zentrumsschneiden in der Lage, mit den Zentrumsschneiden in ein Werkstück einzutauchen. Durch den Hohlschliff ist das Fräserzentrum ausreichend stabil, auch wenn das radial innere Schneideneck auf einem Durchmesser liegt, der nur einen Bruchteil, beispielsweise ein Viertel des Nenndurchmessers des Fräswerkzeugs ausmacht.

Die neuartige Gestaltung des Fräswerkzeugs beruht auf der überraschenden Erkenntnis, dass die verhältnismäßig flachen Zentrumsschneiden dadurch, dass sie im Vergleich zum Nenndurchmesser nur eine verhältnismäßig kleine radiale Erstreckung haben, ohne weiteres in der Lage sind, für eine ausreichende Spanbildung zu sorgen, und zwar auch dann, wenn der Spanwinkel der Zentrumsschneiden bereichsweise negativ bzw. leicht negativ ist. Damit kann das Fräswerkzeug auch zu weiteren spanabhebenden Bearbeitungen, wie dem linearen oder zirkularen Schrägeintauchen bzw. dem Rampen, dem Zirkularfräsen, dem sogenannten Waterline-Fräsen, dem Profilfräsen und sogar dem Bohren ins Volle, also dem Anbohren herangezogen werden. Begünstigt wird diese Erweiterung des Einsatzgebietes des Fräswerkzeugs dadurch, dass die radial inneren Schneidenecke auf einem gemeinsamen Teilkreis und in einer gemeinsamen Radialebene liegen, so dass das Fräswerkzeug beim Bohren nicht verläuft. Der Hohlschliff kann dabei zusätzlich zur Zentrierung herangezogen werden.

Das Konzept ist grundsätzlich für Fräswerkzeuge mit einer beliebigen Anzahl von Stirnschneiden anwendbar. Versuche haben allerdings gezeigt, dass bei Nenndurchmessern ab 10 mm die Anzahl der Stirnschneiden mindestens 3, vorzugsweise 5 betragen soll, damit eine Bearbeitung mit einem angestrebten möglichst hohen Zeitspanvolumen zuverlässig realisierbar ist.

Erfindungsgemäß sind die Zentrumsschneiden im Bereich des Fräserkerns von einer Ausspitzung gebildet, mit der die Freifläche der in Drehrichtung jeweils vorlaufenden Zentrumsschneide ausgebildet ist. Dadurch ergibt sich eine vereinfachte Herstellung des Fräswerkzeugs. Denn die Bewegung der Schleifscheibe für die Herstellung der Ausspitzung kann gleichzeitig zur Herstellung der Freifläche der in Drehrichtung jeweils benachbart vorlaufenden Stirnschneide genutzt werden. Diese Weiterbildung ist insbesondere dann von Vorteil, wenn mehr als 2, vorzugsweise mehr als 4 Zentrumsschneiden vorliegen.

Vorteilhafte Weiterbildungen sind Gegenstand der Unteransprüche.

Der Anschliff des Fräswerkzeugs wird hinsichtlich der Schneidenstabilität weiter verbessert und zusätzlich vereinfacht, wenn die Zentrumsschneiden gemäß Anspruch 2 um ein vorbestimmtes Hintermitte-Maß zu einer durch die Zentrumsachse und im Wesentlichen parallel zur Zentrumsschneide verlaufenden Axialebene versetzt sind. Auf diese Weise können die Ausspitzungen über Mitte geschliffen werden, wodurch ein Zentrums-Flächenbereich, in dem die Zentrumsschneiden ineinanderlaufen, auf ein Minimum beschränkt wird, ohne dort eine undefinierte Spitze auszubilden.

Grundsätzlich kann die Ausspitzung nach Anspruch 2 auch dazu herangezogen werden, den Verlauf der Zentrumsschneide außerhalb des Fräserkerns zu korrigieren, was von Vorteil sein kann, wenn der Spanraum an der Fräserspitze vergrößert werden soll. Eine besonders hohe Stabilität des Fräswerkzeugs ergibt sich, wenn - gemäß Anspruch 3 - die Zentrumsschneiden zumindest im Bereich des radial äußeren Schneidenecks von der zwischen den Stirnschneiden liegenden Spannut gebildet sind.

Bezüglich der Ausgestaltung des spiralisierten Verlaufs der Stirnschneiden besteht ein breites Spektrum von Möglichkeiten. Ein vorteilhafter Kompromiss von einfacher Herstellung und gutem Spantransport gemäß einer ersten Alternative gelingt dann, wenn - gemäß Anspruch 4 - die Stirnschneiden derart ausgebildet sind, dass der axiale Spanwinkel, d.h. der Winkel, den die Tangente der Stirnschneide bei Betrachtung in einer Axialebene mit dieser einschließt, über die gesamte Länge der Stirnschneide konstant ist.

In diesem Fall kann die Laufruhe des Fräswerkzeugs wirksam verbessert werden, wenn zumindest zwei der axialen Spanwinkel der einzelnen Stirnschneiden, beispielsweise alle axialen Spanwinkel, unterschiedlich sind, wobei bereits geringfügige Abweichungen, beispielsweise im Bereich eines halben Winkelgrades, genügen. Vorzugsweise sind bei mehr als zwei Stirnschneiden die axialen Spanwinkel benachbarter Stirnschneiden unterschiedlich, beispielsweise um 0,5 bis 2°, vorzugsweise um 1 bis 1,5°.

Gemäß einer im Hinblick auf die Herstellbarkeit vorteilhaften und bevorzugten Ausführungsform - gemäß Anspruch 6 - folgen dabei die Stirnschneiden einem derartigen Verlauf, dass in einer auf einer Zentrumsachse des Fräswerkzeugs senkrecht stehenden Bezugsebene in Umfangsrichtung eine Gleichteilung vorliegt, so dass gilt:

$$AU = 360°/z$$

wobei AU den Umfangsabstand benachbarter Stirnschneiden und z die Anzahl der Stirnschneiden bedeutet.

Es hat sich gezeigt, dass sich die Laufruhe dann besonders positiv beeinflussen lässt, wenn - gemäß Anspruch 7 - die Bezugsebene im Bereich der Stirnschneiden liegt.

Gute Zerspanungsergebnisse insbesondere im Hinblick auf den Abtransport der Späne und Schneidleistung konnten für alle eingangs beschriebenen Bearbeitungsaufgaben mit einem axialen Spanwinkel im Bereich zwischen 18 und 25°, vorzugsweise zwischen 20 und 23°, erzielt werden.

Eine herstellungstechnisch ebenfalls vorteilhafte Ausführungsform für die Gestaltung des Fräswerkzeugs ist Gegenstand des Anspruchs 9, wonach die Stirnschneiden derart ausgebildet sind, dass der axiale Spanwinkel als Winkel, den die Tangente der Stirnschneide an einem Bezugspunkt bei Betrachtung in einer Axialebene mit dieser einschließt, vom radial inneren Schneideneck ausgehend linear mit dem axialen Abstand des Bezugspunkts vom radial inneren Schneideneck zunimmt. Die Spannut kann auf diese Weise mit einem konstanten Verhältnis von axialer Vorschubgeschwindigkeit der die Spannut schleifenden Schleifscheibe und Drehgeschwindigkeit des Werkzeug-Rohlings eingebracht werden. Bei dieser Ausgestaltung wird die konische Spirale der Spannut mit zunehmendem Abstand vom radial inneren Schneideneck immer flacher, wodurch positiv auf den wirksamen Schneidkeil Einfluss genommen werden kann.

Wenn dabei - gemäß Anspruch 10 - die Anordnung so getroffen ist, dass sich die axialen Spanwinkel zumindest zweier Stirnschneiden, beispielsweise aller Stirnschneiden, am radial inneren Schneideneck voneinander unterscheiden, liegt entweder über den gesamten Schneidteil oder aber über den Schneidteil mit Ausnahme einer in ihm liegenden Bezugsebene eine Ungleichteilung der Stirnschneiden vor, wodurch sich die Laufruhe des Fräswerkzeugs positiv beeinflussen lässt.

Es hat sich gezeigt, dass es insbesondere bei Nenndurchmessern bis zu 30 mm genügt, das Fräswerkzeug mit zumindest 3, vorzugsweise 5 Stirnschneiden auszustatten, um die gewünschten Zeitspanvolumen zu erreichen.

Der Spitzenwinkel der Konusmantelfläche, auf der die Zentrumsschneiden liegen, kann in weiten Grenzen variiert werden, und er wird in der Regel in Abhängigkeit vom zu zerspanenden Material gewählt. Für die Zerspanung schwer zerspanbarer Materialien, wie z.B. hochlegierter Stähle, hat es sich als vorteilhaft erwiesen, den Spitzenwinkel der Konusmantelfläche in den Bereich zwischen 182 und 188°, vorzugsweise in den Bereich zwischen 183 und 185° zu legen.

Vorzugsweise wird der Freiwinkel der Zentrumsschneiden auf die Beschaffenheit des zu zerspanenden Werkstoffs abgestimmt. Vorzugsweise wird der Freiwinkel der Zentrumsschneiden auch in Abhängigkeit vom Nenndurchmesser des Fräswerkzeugs gewählt. Gute Ergebnisse lassen sich bei Nenndurchmessern bis 30 mm bei der Bearbeitung von schwer zerspanbaren Werkstoffen mit einem Freiwinkel im Bereich zwischen 3 und 20°, vorzugsweise zwischen 4 und 10°, erzielen.

Es hat sich gezeigt, dass es für die besonders stabile Gestaltung der Fräserspitze bereits ausreicht, wenn das Hintermitte-Maß der Zentrumsschneiden im Bereich zwischen 0,01 und 0,03xD, vorzugsweise zwischen 0,013 und 0,02xD liegt, wobei D den Nenndurchmesser des Fräswerkzeugs bezeichnet.

Über die Tiefe der Spannuten lässt sich weiter Einfluss auf die Zerspanungsleistung und die Stabilität des Fräswerkzeugs nehmen. Vorteilhafterweise haben die zwischen den Stirnschneiden liegenden Spannuten ausgehend von der Fräserspitze eine in axialer Richtung zunehmende Tiefe.

Bei einem Fasfräser für die Herstellung einer 45°-Fase hat es sich als vorteilhaft herausgestellt, wenn das Fräswerkzeug - gemäß Anspruch 16 - derart ausgeführt wird, dass der Kerndurchmesser am inneren Schneideneck im Bereich zwischen 0,15 bis 0,19xD und am radial äußeren Schneideneck im Bereich zwischen 0,6 bis 0,8xD liegt, wobei D den Nenndurchmesser des Fräswerkzeugs bezeichnet.

Das Fräswerkzeug ist bei gesteigertem Zeitspanvolumen erheblichen Belastungen ausgesetzt. Deshalb ist es vorteilhaft, wenn es einstückig aus einem Hartstoffmaterial wie Vollhartmetall (VHM), vorzugsweise Feinstkorn-Hartmetall mit einer Korngröße unterhalb 1,3 $\mu$m, vorzugsweise unterhalb 0,8 $\mu$m ausgebildet ist, was sich auch positiv auf die Steifigkeit und Laufruhe auswirkt. Aufgrund der kleinen Korngröße können die Zentrumsschneiden geometrisch exakt und formstabil ausgebildet werden, ohne Schneiden-Ausbrüche befürchten zu müssen.

Zusätzlich kann die Standzeit des Fräswerkzeugs dadurch gesteigert werden, dass es zumindest im Bereich der Schneiden mit einer Beschichtung, vorzugsweise einer TiAlN-Beschichtung ausgestattet wird.

Weitere vorteilhafte Ausgestaltungen sind Gegenstand der übrigen Unteransprüche.

Kurzbeschreibung der Figuren

Nachstehend werden anhand schematischer Zeichnungen Ausführungsbeispiele der Erfindung näher erläutert. Es zeigen:

Fig. 1 ist eine perspektivische Ansicht einer ersten Ausführungsform des Fräswerkzeugs;

Fig. 2 in vergrößerter perspektivischer Ansicht eine Darstellung des Verlaufs der Stirnschneiden und der Zentrumsschneiden bei einer etwas modifizierten Ausführungsform;

Fig. 3 A, 3B und 3C Ansichten des Fräswerkzeugs gemäß der ersten Ausführungsform zur Erläuterung der Herstellung des Fräser-Anschliffs, wobei Fig. 3A eine Seitenansicht, Fig. 3B eine Stirnansicht und Fig. 3C einen Ausschnitt der Seitenansicht gemäß Fig. 3A darstellen;

Fig. 4 in stark vergrößerter Ansicht die Stirnansicht des Fräswerkzeugs gemäß Fig. 2 und 3;

Fig. 5 die fotographische Ansicht der Zentrumsschneiden einer nicht erfindungsgemäßen modifizierten Variante des Fräswerkzeugs;

Fig. 6 bis 10 und 10A schematische Darstellungen zur Veranschaulichung verschiedener Fräsbearbeitungen, die mit dem Fräswerkzeug möglich sind, wobei Fig. 9A in vergrößerter Darstellung die Einzelheit "XA" in Fig. 10 zeigt;

Fig. 11 in vergrößerter perspektivischer Ansicht eine schematische Darstellung einer Spannut in einem Fräswerkzeug gemäß der Ausführungsform nach Figur 2 bis 5; und

Fig. 12 eine perspektivische Ansicht eines Fräswerkzeugs gemäß der ersten Ausführungsform nach Figur 1.

Beschreibung der Ausführungsbeispiele

Nachstehend werden Ausführungsbeispiele der vorliegenden Offenbarung auf der Basis der zugehörigen Figuren beschrieben.

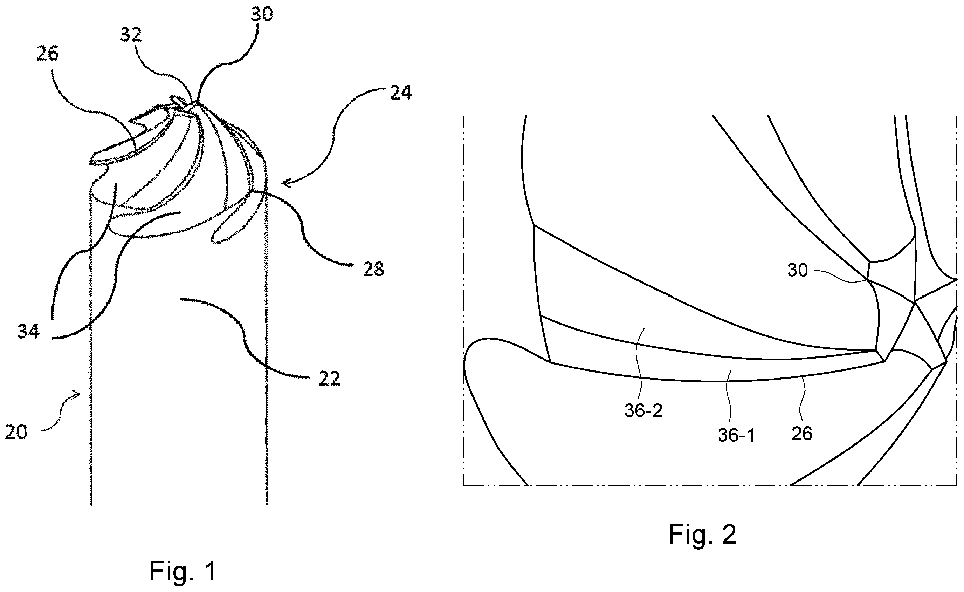

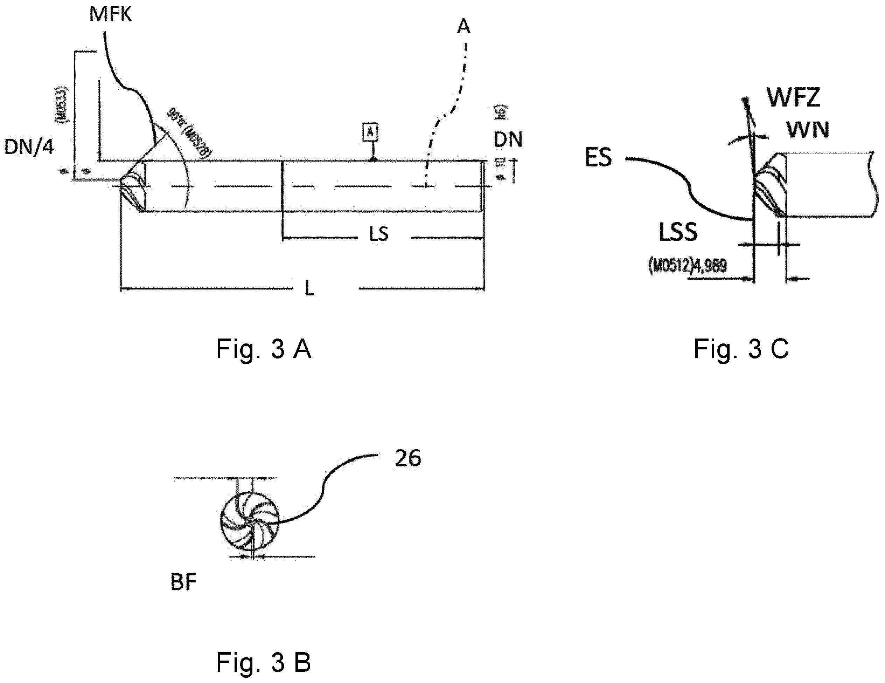

In Fig. 1 ist mit dem Bezugszeichen 20 ein Fräswerkzeug zur Herstellung von Fasflächen an Werkstücken gezeigt. Das Fräswerkzeug mit dem Nenndurchmesser DN und der Länge L (siehe Fig. 3A) ist als Schaftfräser ausgebildet, d.h. es hat einen zylindrischen Schaft 22 mit einem Spannabschnitt der Länge LS und einen Schneidteil 24, der im gezeigten Ausführungsbeispiel 5 Stirnschneiden 26 hat. Damit das Fräswerkzeug eine Fasoperation ausführen kann, liegen die Stirnschneiden 26 auf einer gemeinsamen Mantelfläche MFK eines Kegels, hier eines 90°-Kegels, über den der Faswinkel von beispielsweise 45° festgelegt wird. Die Stirnschneiden 26 sind nicht geradlinig, sondern sie verlaufen in Drehrichtung spiralisiert konvex. Mit anderen Worten, sie folgen im Wesentlichen einem Abschnitt einer konischen Spirale. Spannuten sind mit 34 bezeichnet. Die axiale Länge des Schneidteils 24 ist mit LSS bezeichnet und beträgt bei einem Fräswerkzeug mit einem Nenndurchmesser DN von 10 mm 3,75 mm, wenn die radial inneren Schneidenecke 30 auf einem Durchmesser liegen, der einem Viertel des Nenndurchmessers DN entspricht.

Genauer gesagt erstrecken sich die Stirnschneiden 26 jeweils von einem radial äußeren Schneideneck 28, das auf dem Nenndurchmesser DN liegt, zu einem stirnseitigen inneren Schneideneck 30, das auf einem Durchmesser liegt, der bei der Ausführungsform gemäß Figur 3 DN/4 beträgt. Am radial inneren Schneideneck 30 gehen die Stirnschneiden 26 in Zentrumsschneiden 32 über, deren Ausbildung und Lage im Folgenden unter Bezug auf die Figuren 2 bis 5 näher beschrieben werden soll.

Wie der Fig. 3C entnommen werden kann, sind die Zentrumsschneiden 26 um einen Neigungswinkel WN zu einer auf der Zentrumsachse A des Fräswerkzeugs senkrechten Ebene ES (siehe Figur 3C) zum Spannabschnitt hin geneigt, d.h. sie liegen auf einer nicht näher bezeichneten Konusmantelfläche, für dessen Spitzenwinkel WSK gilt:

$$WSK = 180° + 2WN.$$

Ein bevorzugter Winkelbereich für den Spitzenwinkel WSK der Konusmantelfläche liegt zwischen 182 und 188°, vorzugsweise im Bereich zwischen 183 und 185°.

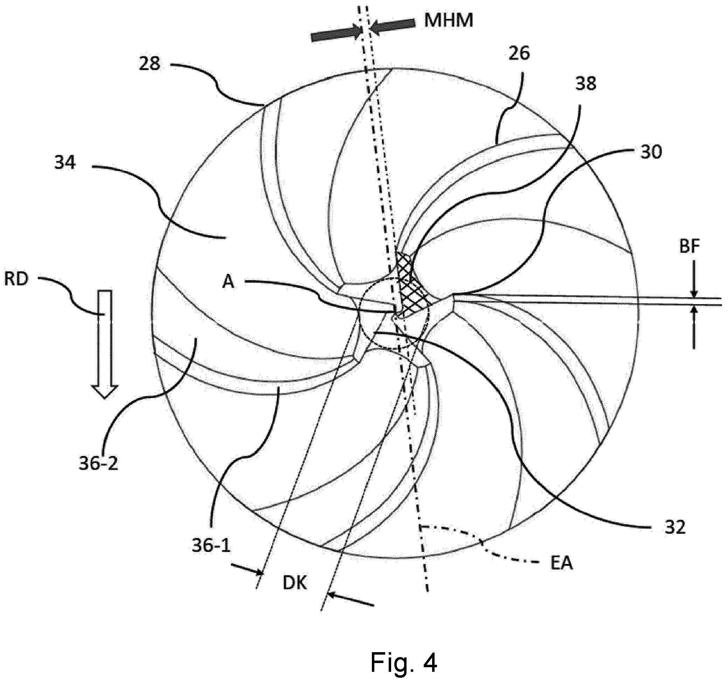

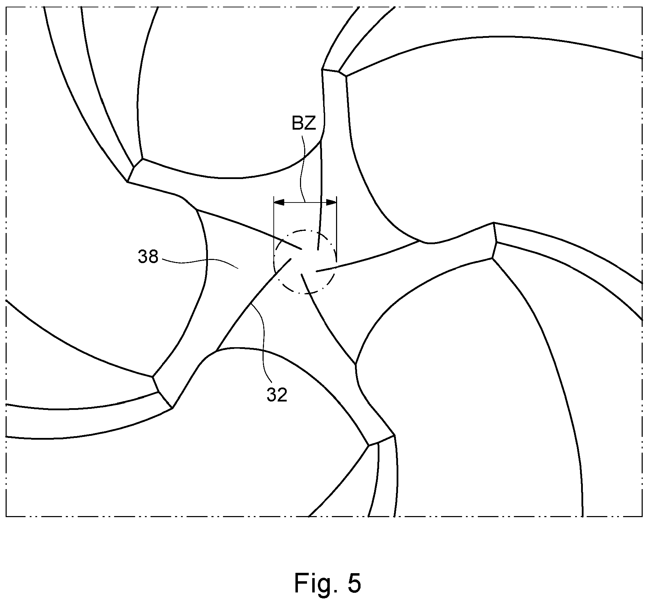

Vom radial äußeren Schneideneck 30 laufen die Zentrumsschneiden 32 mit einem definierten positiven Spanwinkel in einen im Fräserkern liegenden Bereich des Fräserzentrums. Aus den Figuren 4 und 5 ist die Schneidengestaltung in einer Stirnansicht und einer perspektivischen Ansicht im Detail gezeigt. Mit dem Pfeil RD ist die Drehrichtung des Fräswerkzeugs bezeichnet: Man erkennt, dass die in Drehrichtung spiralisiert konvex verlaufenden Stirnschneiden 26 durch das Einschleifen von Spannuten 34 gebildet werden, die mit zunehmendem Abstand vom radial inneren Schneideneck 30 immer breiter und tiefer werden. Vorteilhafterweise liegt der Kerndurchmesser DK (siehe Figur 4) am radial inneren Schneideneck 30 im Bereich zwischen 0,15 bis 0,19xD und am radial äußeren Schneideneck 28 im Bereich zwischen 0,6 bis 0,8xD liegt, wobei D den Nenndurchmesser des Fräswerkzeugs bezeichnet.

Ferner ist erkennbar, dass die Stirnschneiden 26 zwei Freiflächen, eine Primär-Freifläche 36-1 mit einem kleineren Freiwinkel von beispielsweise etwa 10° und eine Sekundärfreifläche 36-2 mit einem größeren Freiwinkel von beispielsweise etwa 30°, aufweisen. Die Freiflächen 36-1 können dabei so gestaltet werden, dass ihre Breite zum radial äußeren Schneideneck 28 hin zunimmt. In jedem Fall muss allerdings sichergestellt sein, dass am radial inneren Schneideneck 30 eine ausreichend stabile Fasenbreite BF (siehe Figur 4) verbleibt, die bei einem Fräswerkzeug mit einem Nenndurchmesser DN von 10 mm nicht unter 0,1 mm liegen soll. Bei einem Nenndurchmesser DN von 16 mm kann sie beispielsweise 0,m mm betragen.

Die Zentrumsschneiden 32 sind von der Spannut 34 gebildet, d.h. im Bereich des radial inneren Schneidenecks 30, haben sie einen positiven Spanwinkel. Im Bereich des Fräserkerns werden die Zentrumsschneiden 32 von einer Ausspitzung 38 gebildet, die in Figur 4 als doppelt schraffierte Fläche dargestellt ist. Die Ausspitzung ist bei der in Figur 4 gezeigten Variante so gestaltet, dass damit gleichzeitig eine Schneidenkorrektur der Zentrumsschneiden 32 erfolgt, so dass die Zentrumsschneiden 32 vom radial inneren Schneideneck 30 ausgehend geradlinig in den Bereich des Fräserzentrums laufen. Bei der Variante gemäß Figur 5 erfolgt durch die Ausspitzung 38 keine Schneidenkorrektur.

Beiden Varianten gemäß Figur 4 und 5 ist gemeinsam, dass die Ausspitzung 38 einer ersten Zentrumsschneide gleichzeitig die Freifläche der in Drehrichtung jeweils vorlaufenden Zentrumsschneide ausbildet. Der Freiwinkel der Zentrumsschneiden 32 - in Figur 3C mit WFZ bezeichnet - kann in einem weiten Bereich variieren und er wird in der Regel in Abhängigkeit vom Nenndurchmesser DN und/oder vom Material des Fräswerkzeugs und/oder vom zu zerspanenden Werkstoff gewählt. Je stabiler die Fräserspitze sein muss, desto kleiner wird der Freiwinkel FWZ gewählt. Vorzugsweise liegen die Freiwinkel FWZ im Bereich von 3 und 20°, besonders bevorzugt zwischen 4 und 10°.

Die Ausspitzung gemäß Figur 5 ist so hergestellt, dass der Spanwinkel der Zentrumsschneiden 32 im Fräserkern NULL bzw. leicht negativ ist. Es ist jedoch gleichermaßen möglich, den Spanwinkel an dieser Stelle bis hin zu einem Zentrumsbereich BZ, in dem die Zentrumsschneiden 32 ineinanderlaufen, positiv zu halten. Der Zentrumsbereich hat einen Durchmesser, der lediglich einem kleinen Bruchteil des Kerndurchmessers entspricht.

Aus den Darstellungen gemäß Figur 4 und 5 ist ferner entnehmbar, dass die Zentrumsschneiden 32 um ein vorbestimmtes Hintermitte-Maß MHM zu einer durch die Fräserachse A und im Wesentlichen parallel zur Zentrumsschneide 32 verlaufenden Axialebene EA versetzt sind, wodurch der Spitzenanschliff des Fräswerkzeugs vereinfacht wird. Bevorzugt liegt das Hintermitte-Maß MHM der Zentrumsschneiden 32 im Bereich zwischen 0,01 und 0,03xD, vorzugsweise zwischen 0,013 und 0,02xD, wobei D den Nenndurchmesser DN des Fräswerkzeugs bezeichnet.

Mit der vorstehend beschriebenen Gestaltung des Fräswerkzeugs gelingt es, das Einsatzgebiet des Fräswerkzeugs erheblich zu erweitern. Denn neben dem spiralisierten Verlauf der Stirnschneiden, mit dem der Schnitt grundsätzlich weicher gemacht wird, sorgen die erfindungsgemäß gestalteten Zentrumsschneiden dafür, dass die gesamte Länge der Stirnschneiden für den Zerspanungsprozess genutzt werden kann.

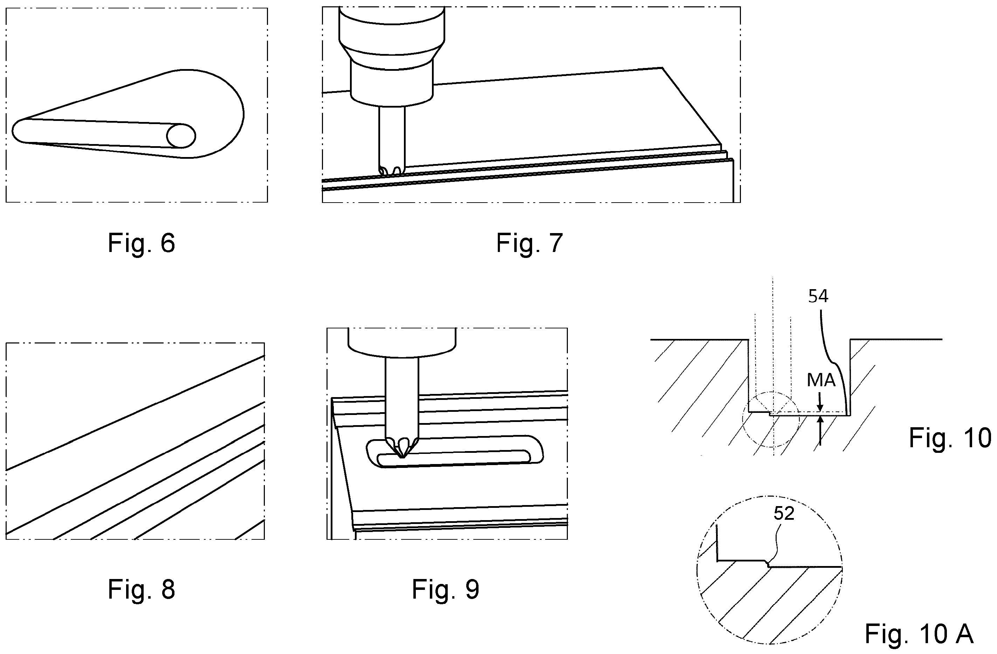

Weil die verhältnismäßig flachen Zentrumsschneiden 32 im Vergleich zum Nenndurchmesser DN nur eine verhältnismäßig kleine radiale Erstreckung haben, sind sie ohne weiteres in der Lage, für eine ausreichende Spanbildung zu sorgen, und zwar auch dann, wenn der Spanwinkel der Zentrumsschneiden insgesamt oder bereichsweise, wie z.B. im Fräserkern negativ bzw. leicht negativ ist. Damit kann das Fräswerkzeug auch zu bislang nicht eröffneten, weiteren spanabhebenden Bearbeitungen herangezogen werden, die in den Figuren 6 bis 10 und 10A angedeutet sind.

So eignet sich das Fräswerkzeug neben dem Nutenfräsen (wie in Figur 7 gezeigt) und dem Nutenfasen (gemäß Figur 8) auch zum zirkularen oder linearen Schrägeintauchen bzw. dem Rampen, wie in Figur 6 gezeigt, wobei beliebige Rampwinkel darstellbar sind. Gleichermaßen kann das Werkzeug zum Zirkularfräsen bzw. zum sogenannten Waterline-Fräsen herangezogen werden, wenn beispielsweise eine Tasche oder ein Fenster gefräst werden soll, wie in Figur 9 gezeigt.

Es hat sich sogar gezeigt, dass das Fräswerkzeug auch zum Bohren ins Volle, also dem Anbohren herangezogen werden kann. Begünstigt wird diese Erweiterung des Einsatzgebietes des Fräswerkzeugs dadurch, dass die radial inneren Schneidenecke 30 auf einem gemeinsamen Teilkreis und in einer gemeinsamen Radialebene (siehe ES in Figur 3C) liegen, so dass das Fräswerkzeug beim Bohren nicht verläuft. Denn das Fräswerkzeug ist durch die Ausgestaltung der Zentrumsschneiden in der Lage, mit den Zentrumsschneiden in ein Werkstück einzutauchen. Durch den Hohlschliff ist das Fräserzentrum ausreichend stabil, auch wenn das radial innere Schneideneck auf einem Durchmesser liegt, der nur einen Bruchteil, beispielsweise ein Viertel des Nenndurchmessers des Fräswerkzeugs ausmacht. Der Hohlschliff kann dabei zusätzlich zur Zentrierung herangezogen werden.

Eine weitere Besonderheit des Fräswerkzeugs soll anhand der Figuren 10 und 10A beschrieben werden, in denen ein Schnitt durch ein Werkstück 50 dargestellt ist. Die Bearbeitungsaufgabe besteht darin, eine Kante 52, die sich in sehr kleinem Abstand MA von einer Bodenfläche 54 einer Nut befindet, zu entgraten.

Weil bei dem beschriebenen Fräswerkzeug - in Figur 10 strichpunktiert angedeutet - das radial innere Schneideneck Bestandteil der Stirnschneide ist und weil die Zentrumsschneiden auf einer Konusmantelfläche mit einem Spitzenwinkel von über 180° liegen, entsteht eine Art Hohlschliff der Fräserspitze, der es erlaubt, auch Fasflächen an derartigen Werkstückkanten 52 anzubringen, die sich in kleinstem Abstand MA zu einer Bodenfläche 54 einer Nut befinden.

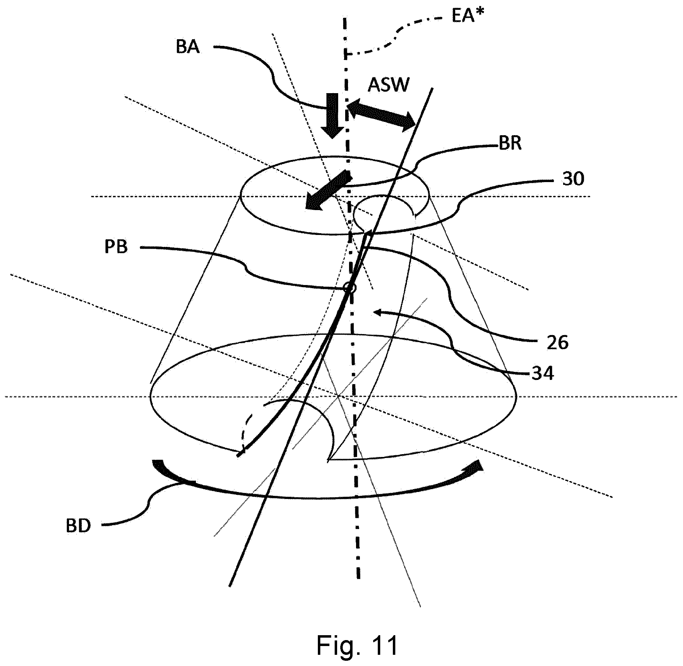

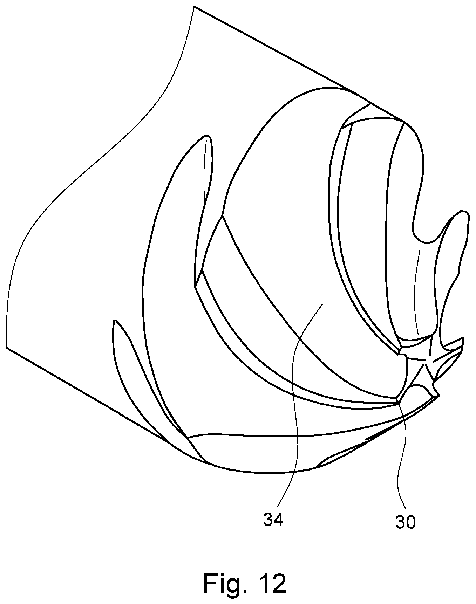

Der spiralisierte Verlauf der Stirnschneiden 26 kann auf unterschiedlichste Art und Weise hergestellt werden. Einflussgrößen sind dabei die geforderten Schnittbedingungen entlang der Stirnschneiden 26 und die Menge der anfallenden und abzutransportierenden Späne. Varianten zum Verlauf der Stirnschneiden 26 werden im Folgenden anhand der Figuren 11 und 12 erläutert:

Wenn es darum geht, den Spanraum so weit wie möglich zu vergrößern und einen Spänestau zu vermeiden, ist es von Vorteil, die Stirnschneiden 26 derart auszubilden, dass der axiale Spanwinkel ASW - wie in Figur 11 schematisch dargestellt - als Winkel, den eine Tangente T der Stirnschneide 26 bei Betrachtung in einer mit strichpunktierter Linie in Figur 8 angedeuteten Axialebene EA* mit dieser einschließt, über die gesamte Länge der Stirnschneide 26 konstant ist. Dies erreicht man herstellungstechnisch beispielsweise dadurch, dass die axiale Bewegung BA der die Spannuten 34 einschleifenden Schleifscheibe, in geeigneter Weise auf die Drehbewegung BD des Werkzeugrohlings abgestimmt wird, während eine radiale Relativbewegung BR zugelassen wird, um die Tiefe TS der Spannut zu steuern bzw. zu variieren.

Das Einschleifen der Spannut 34 kann auch dazu genutzt werden, den radialen Spanwinkel am radial inneren Schneideneck 30 zu definieren. Dieser radiale Spanwinkel wird beispielsweise im Bereich von 5 bis 10°, vorzugsweise bei 6 bis 8° gehalten.

Um die Laufruhe des Fräswerkzeugs zu verbessern, sind zumindest zwei der axialen Spanwinkel ASW der einzelnen Stirnschneiden 26 unterschiedlich. Besonders bevorzugt folgen die Stirnschneiden 26 einem derartigen Verlauf, dass in einer auf der Fräserachse A senkrecht stehenden Bezugsebene eine Gleichteilung der Stirnschneiden 26 vorliegt, so dass gilt:

$$AU = 360°/z$$

wobei AU den Umfangsabstand benachbarter Stirnschneiden 26 und z die Anzahl der Stirnschneiden 26 bedeutet. Diese Bezugsebene kann außerhalb des Bereichs der Stirnschneiden 26 liegen, oder aber auch innerhalb des Bereichs der Stirnschneiden 26. liegt. Mit einem axialen Spanwinkel ASW im Bereich zwischen 18 und 25°, vorzugsweise zwischen 20 und 23°, eignet sich das Fräswerkzeug zu allen vorstehend beschriebenen Bearbeitungsaufgaben, auch zum Bohren ins Volle. Ein Werkzeug in dieser Ausgestaltung ist in den Figuren 2 bis 5 gezeigt. Beispielsweise ist das Fräswerkzeug 20 gemäß Figur 3 mit 5 spiralisiert verlaufenden Stirnschneiden 26 ausgestattet, von denen eine erste einen axialen Spanwinkel ASW, also eine konstante Steigung von 21° hat, während die folgenden zweiten bis fünften Stirnschneiden 26 Steigungen von 22°, 23°, 21,5° und 20° haben. Die Steigungen benachbarter Stirnschneiden 26 unterscheiden sich demnach nur um maximal 1,5°.

Eine alternative Herstellungsmethode wird dann verfolgt, wenn die Stirnschneiden 26 derart ausgebildet sind, dass der axiale Spanwinkel ASW - als Winkel, den die Tangente T der Stirnschneide 26 an einem Bezugspunkt PB bei Betrachtung in einer Axialebene EA* mit dieser einschließt, vom radial inneren Schneideneck 30 ausgehend linear mit dem axialen Abstand des Bezugspunkts PB vom radial inneren Schneideneck 30 zunimmt. In diesem Fall wird die Spirale mit zunehmendem Abstand von der Fräserspitze immer flacher. Bei dieser Herstellungsmethode kann beim Einschleifen der Spannuten 34 das Verhältnis von axialem Vorschub BA und Winkelgeschwindigkeit des Fräswerkzeugrohlings konstant gehalten werden. Die Verflachung der Spirale ergibt sich dann dadurch, dass die Drehgeschwindigkeit des Kegelmantels, auf dem die Stirnschneiden 26 liegen, mit der Annäherung zum radial äußeren Schneideneck 28 linear in Abhängigkeit vom Kegelwinkel MFK zunimmt. Ein derartiges Werkzeug ist in den Figuren 1 und 12 dargestellt.

Man erkennt, dass die Spannut 34 jeweils relativ steil am radial inneren Schneideneck 30 beginnt und im Verlauf zunehmend flacher wird. Gleichzeitig verändert sich ihre Tiefe und Querschnittsform. Die Gestaltung in dieser Form wird in der Regel dadurch erreicht, dass eine Profilschleifscheibe bei der axialen Bewegung nicht nur radial verfahren, sondern zusätzlich verschwenkt wird.

Um auch bei dieser Herstellungsmethode durch Schwingungsunterdrückung eine bessere Laufruhe des Fräswerkzeugs zu erreichen, wird das Fräswerkzeug derart hergestellt, dass die Stirnschneiden 26 in Umfangsrichtung unterschiedlich bzw. ungleichmäßig beabstandet sind. Die Herstellung wird dann einfach, sich die axialen Spanwinkel ASW (siehe Figur 11) zumindest zweier Stirnschneiden 26 am radial inneren Schneideneck 30 voneinander unterscheiden. In diesem Fall kann im Bereich der radial inneren Schneidenecke 30 eine Gleichteilung der Schneiden vorliegen, und die Bewegung der Schleifscheibe kann beim Einschleifen der Spannuten 34 nach dem gleichen Programm ablaufen, um dennoch über die gesamte Länge der Stirnschneiden 26 eine Ungleichteilung zu erzielen.

Die vorstehend beschriebenen Fräswerkzeuge haben 5 Stirnschneiden 26. Die Zahl der Stirnschneiden 26 kann jedoch in weiten Grenzen variiert werden. Sie kann bei kleinen Nenndurchmessern 2 und bei größeren Nenndurchmessern auch mehr als 5 betragen.

Auch die Kegelwinkel der Mantelfläche MFK, auf der die Stirnschneiden 26 liegen, können von dem beschriebenen Winkel von 90° abweichen.

Vorzugsweise besteht das Fräswerkzeug zumindest im Schneidteil aus einem Hartstoffmaterial wie Vollhartmetall (VHM), vorzugsweise Feinstkorn-Hartmetall mit einer Korngröße unterhalb 1,3 $\mu$m, vorzugsweise unterhalb 0,8$\mu$m. Das in den Figuren gezeigte Fräswerkzeug ist einstückig aus einem solchen Material gefertigt.

Um die Standzeit des Fräswerkzeugs weiter zu verbessern, ist das Fräswerkzeug in der Regel zumindest im Bereich der Schneiden 26 und/oder 32 mit einer Beschichtung, vorzugsweise einer TiAlN-Beschichtung ausgestattet.

Selbstverständlich sind Abwandlungen von den gezeigten Ausführungsformen möglich, ohne den Grundgedanken der Erfindung zu verlassen.

So wird die Ausspitzung 38 zur Herstellung der Zentrumsschneiden 32 im Fräserkern derart hergestellt, dass der Spanwinkel der Zentrumsschneiden 32 ausgehend von radial inneren Schneideneck 30 bis zum Bereich BZ (siehe Figur 5) positiv bleibt.

Die Erfindung schafft somit ein Fräswerkzeug zur Herstellung von Fasflächen an Werkstücken. Es hat einen zylindrischen Schaft und einen Schneidteil, der zumindest zwei, jeweils auf einer Kegelmantelfläche liegende, in Drehrichtung spiralisiert konvex verlaufende Stirnschneiden hat, die sich jeweils von einem radial äußeren Schneideneck zu einem stirnseitigen inneren Schneideneck erstrecken. Um das Einsatzgebiet des Fräswerkzeugs auf Bearbeitungen wie das "Rampen" bzw. das lineare Schrägeintauchen, das Zirkularfräsen, das Anbohren oder das Waterline-Fräsen zu erweitern, gehen die Stirnschneiden am inneren Schneideneck in Zentrumsschneiden über, die auf einer Konusmantelfläche mit einem Spitzenwinkel von über 180° liegen und mit einem definierten positiven Spanwinkel in einen im Fräserkern liegenden Bereich des Fräserzentrums laufen.

**Patentansprüche**

1. Fräswerkzeug zur Herstellung von Fasflächen an Werkstücken, mit einem zylindrischen Schaft (22) und einem Schneidteil (24), der zumindest zwei, jeweils auf einer Kegelmantelfläche (MFK) liegende Stirnschneiden (26) hat, die sich jeweils von einem radial äußeren Schneideneck (28) zu einem stirnseitigen inneren Schneideneck (30) erstrecken, wobei die Stirnschneiden (26) am inneren Schneideneck (30) in Zentrumsschneiden (32) übergehen, die auf einer Konusmantelfläche mit einem Spitzenwinkel (WSK) von über 180° liegen, **dadurch gekenn-**

**zeichnet, dass** die Stirnschneiden (26) in Drehrichtung (RD) spiralisiert konvex verlaufen, die Zentrumsschneiden (32) mit einem definierten, positiven Spanwinkel in einen im Fräserkern liegenden Bereich (BZ) des Fräserzentrums laufen, und die Zentrumsschneiden (32) im Bereich des Fräserkerns jeweils von einer Ausspitzung (38) gebildet sind, mit der die Freifläche der in Drehrichtung jeweils vorlaufenden Zentrumsschneide (32) ausgebildet ist.

2. Fräswerkzeug nach Anspruch 1, **dadurch gekennzeichnet, dass** die Zentrumsschneiden (32) um ein vorbestimmtes Hintermitte-Maß (MHM) zu einer durch die Werkzeugachse (A) und im Wesentlichen parallel zur Zentrumsschneide (32) verlaufenden Axialebene (EA) versetzt sind.

3. Fräswerkzeug nach einem der Ansprüche 1 bis 2, **dadurch gekennzeichnet, dass** die Zentrumsschneiden (32) im Bereich des radial inneren Schneidenecks (30) von der zwischen den Stirnschneiden (32) liegenden Spannut (34) gebildet sind.

4. Fräswerkzeug nach einem der Ansprüche 1 bis 3, **dadurch gekennzeichnet, dass** die Stirnschneiden (32) derart ausgebildet sind, dass der axiale Spanwinkel (ASW) als Winkel, den die Tangente (T) der Stirnschneide (26) bei Betrachtung in einer Axialebene (EA*) mit dieser einschließt, konstant ist.

5. Fräswerkzeug nach Anspruch 4, **dadurch gekennzeichnet, dass** zumindest zwei der axialen Spanwinkel (ASW) der einzelnen Stirnschneiden (26) unterschiedlich sind.

6. Fräswerkzeug nach Anspruch 4 oder 5, **dadurch gekennzeichnet, dass** die Stirnschneiden (26) einem derartigen Verlauf folgen, dass in einer auf einer Zentrumsachse (A) des Fräswerkzeugs 20 senkrecht stehenden Bezugsebene eine Gleichteilung vorliegt, so dass gilt:

$$AU = 360°/z$$

wobei AU den Umfangsabstand benachbarter Stirnschneiden (26) und z die Anzahl der Stirnschneiden 26() bedeutet.

7. Fräswerkzeug nach Anspruch 6, **dadurch gekennzeichnet, dass** die Bezugsebene im Bereich des Schneidteils (24) bzw. im Bereich der Stirnschneiden (26) liegt.

8. Fräswerkzeug nach einem der Ansprüche 4 bis 7, **dadurch gekennzeichnet, dass** der axiale Spanwinkel (ASW) im Bereich zwischen 18 und 25°, vorzugsweise zwischen 20 und 23° liegt.

9. Fräswerkzeug nach einem der Ansprüche 1 bis 3, **dadurch gekennzeichnet, dass** die Stirnschneiden (26) derart ausgebildet sind, dass der axiale Spanwinkel (ASW) als Winkel, den die Tangente (T) der Stirnschneide (26) an einem Bezugspunkt (PB) bei Betrachtung in einer Axialebene (EA*) mit dieser einschließt, vom radial inneren Schneideneck (30) ausgehend linear mit dem axialen Abstand des Bezugspunkts (PB) vom radial inneren Schneideneck (30) zunimmt.

10. Fräswerkzeug nach Anspruch 9, **dadurch gekennzeichnet, dass** sich die axialen Spanwinkel (ASW) zumindest zweier Stirnschneiden (26) am radial inneren Schneideneck (30) voneinander unterscheiden.

11. Fräswerkzeug nach einem der Ansprüche 1 bis 10, **gekennzeichnet durch** zumindest 3, vorzugsweise 5 Stirnschneiden (26).

12. Fräswerkzeug nach einem der Ansprüche 1 bis 11, **dadurch gekennzeichnet, dass** der Spitzenwinkel (WSK) der Konusmantelfläche im Bereich zwischen 182 und 188°, vorzugsweise im Bereich zwischen 183 und 185° liegt.

13. Fräswerkzeug nach einem der Ansprüche 1 bis 12, **dadurch gekennzeichnet, dass** der Freiwinkel (WFZ) der Zentrumsschneiden (32) im Bereich zwischen 3 und 20°, vorzugsweise zwischen 4 und 10°, liegt.

14. Fräswerkzeug nach einem der Ansprüche 2 bis 13, **dadurch gekennzeichnet, dass** das Hintermitte-Maß (MHM) der Zentrumsschneiden (32) im Bereich zwischen 0,01 und 0,03xD, vorzugsweise zwischen 0,013 und 0,02xD liegt, wobei D den Nenndurchmesser (DN) des Fräswerkzeugs (20) bezeichnet.

15. Fräswerkzeug nach einem der Ansprüche 1 bis 14, **dadurch gekennzeichnet, dass** die zwischen den Stirnschneiden (26) liegenden Spannuten (34) ausgehend von der Fräserspitze eine in axialer Richtung zunehmende Tiefe haben.

16. Fräswerkzeug nach Anspruch 15, **dadurch gekennzeichnet, dass** der Kerndurchmesser (DK) in der Radialebene am inneren Schneideneck (30) im Bereich zwischen 0,15 bis 0,19xD und am radial äußeren Schneideneck (28) im Bereich zwischen 0,6 bis 0,8xD liegt, wobei D den Nenndurchmesser des Fräswerkzeugs bezeichnet.

17. Fräswerkzeug nach einem der Ansprüche 1 bis 16, **dadurch gekennzeichnet, dass** die Stirnschneiden (26) auf der Mantelfläche (MFK) eines Kegels mit einem Kegelwinkel von 90° liegen.

18. Fräswerkzeug nach einem der Ansprüche 1 bis 17, **dadurch gekennzeichnet, dass** es einstückig aus einem Hartstoffmaterial wie Vollhartmetall (VHM), vorzugsweise Feinstkorn-Hartmetall mit einer Korngröße unterhalb 1,3 $\mu$m, vorzugsweise unterhalb 0,8$\mu$m gebildet ist.

19. Fräswerkzeug nach einem der Ansprüche 1 bis 18, **dadurch gekennzeichnet, dass** es zumindest im Bereich der Schneiden (26, 32) mit einer Beschichtung, vorzugsweise einer TiAlN-Beschichtung ausgestattet ist.

## Claims

1. Milling tool for producing chamfered surfaces on workpieces, with a cylindrical shank (22) and a cutting part (24) which has at least two end cutting edges (26) each lying on a conical surface (MFK), which extend from a radially outer cutting edge corner (28) to an end inner cutting edge corner (30), respectively, wherein the end cutting edges (26) merge at the inner cutting edge corner (30) into center cutting edges (32) which lie on a conical surface with a tip angle (WSK) of more than 180°, **characterized in that** the end cutting edges (26) run in a spiral convex manner in the direction of rotation (RD), the center cutting edges (32) run with a defined, positive chip angle into a portion (BZ) of the milling cutter center located in the milling cutter core, and the center cutting edges (32) in the portion of the milling cutter core are each formed by a point thinning (38) with which the clearance surface of the center cutting edge (32) leading in the direction of rotation is formed.

2. Milling tool according to claim 1, **characterized in that** the center cutting edges (32) are offset by a predetermined rear center dimension (MHM) relative to an axial plane (EA) extending through the tool axis (A) and essentially parallel to the center cutting edge (32).

3. Milling tool according to one of claims 1 to 2, **characterized in that** the center cutting edges (32) are formed in the region of the radially inner cutting edge corner (30) by the chip flute (34) located between the end cutting edges (32).

4. Milling tool according to one of claims 1 to 3, **characterized in that** the end cutting edges (32) are formed such that the axial chip angle (ASW) as the angle which the tangent (T) of the end cutting edge (26) encloses with the axial plane (EA*) when viewed in this plane is constant.

5. Milling tool according to claim 4, **characterized in that** at least two of the axial rake angles (ASW) of the individual end cutting edges (26) are different.

6. Milling tool according to claim 4 or 5, **characterized in that** the end cutting edges (26) follow such a course that there is equal division in a reference plane perpendicular to a center axis (A) of the milling tool 20, so that the following applies:

$$AU = 360°/z$$

wherein AU denotes the circumferential distance between adjacent end cutting edges (26) and z denotes the number of end cutting edges (26).

7. Milling tool according to claim 6, **characterized in that** the reference plane lies in the portion of the cutting part (24) or in the portion of the end cutting edges (26).

8. Milling tool according to one of claims 4 to 7, **characterized in that** the axial rake angle (ASW) lies in the range between 18 and 25°, preferably between 20 and 23°.

9. Milling tool according to one of claims 1 to 3, **characterized in that** the end cutting edges (26) are formed such that the axial rake angle (ASW) as the angle which the tangent (T) of the end cutting edge (26) at a reference point (PB) encloses with an axial plane (EA*) when viewed in this plane, increases linearly from the radially inner cutting edge corner (30) with the axial distance of the reference point (PB) from the radially inner cutting edge corner (30).

10. Milling tool according to claim 9, **characterized in that** the axial rake angles (ASW) of at least two end cutting edges (26) at the radially inner cutting edge corner (30) differ from one another.

11. Milling tool according to one of claims 1 to 10, **characterized by** at least 3, preferably 5, end cutting edges (26).

12. Milling tool according to one of claims 1 to 11, **characterized in that** the tip angle (WSK) of the conical surface is in the range between 182 and 188°, preferably in the range between 183 and 185°.

13. Milling tool according to one of claims 1 to 12, **characterized in that** the clearance angle (WFZ) of the center cutting edges (32) is in the range between 3 and 20°, preferably between 4 and 10°.

14. Milling tool according to one of claims 2 to 13, **characterized in that** the rear center dimension (MHM) of the center cutting edges (32) is in the range between 0.01 and 0.03xD, preferably between 0.013 and 0.02xD, wherein D denotes the nominal diameter (DN) of the milling tool (20).

15. Milling tool according to one of claims 1 to 14, **characterized in that** the chip flutes (34) located between the end cutting edges (26) have a depth that increases in the axial direction starting from the milling cutter tip.

16. Milling tool according to claim 15, **characterized in that** the core diameter (DK) in the radial plane at the inner cutting edge corner (30) is in the range between 0.15 and 0.19xD and in the range between 0.6 and 0.8xD at the radially outer cutting edge corner (28), wherein D denotes the nominal diameter of the milling tool.

17. Milling tool according to one of claims 1 to 16, **characterized in that** the end cutting edges (26) lie on the lateral surface (MFK) of a cone with a cone angle of 90°.

18. Milling tool according to one of claims 1 to 17, **characterized in that** it is integrally formed from a hard material such as solid carbide (VHM), preferably fine-grained carbide with a grain size below 1.3 $\mu$m, preferably below 0.8 $\mu$m.

19. Milling tool according to any of claims 1 to 18, **characterized in that** it is provided with a coating, preferably a TiAlN coating, at least in the portion of the cutting edges (26, 32).

**Revendications**

1. Outil de fraisage pour la fabrication de facettes de face de dépouille au niveau de pièces à usiner, avec un arbre (22) cylindrique et une partie de coupe (24) qui présente au moins deux tranchants frontaux (26) se trouvant respectivement sur une surface enveloppe conique (MFK) qui s'étend respectivement depuis un angle de coupe (28) radialement extérieur à un angle de coupe (30) intérieur côté frontal, dans lequel les tranchants frontaux (26) passent au niveau de l'angle de coupe intérieur (30) dans des tranchants centraux (32) qui se trouvent sur une surface enveloppe conique avec un angle de pointe (WSK) de plus de 180°, **caractérisé en ce que** les tranchants frontaux (26) s'étendent en spirale de manière convexe dans le sens de rotation (RD), les tranchants centraux (32) s'étendent avec un angle de coupe positif défini dans une zone (BZ) se trouvant dans le noyau de fraise du centre de fraise, et les tranchants centraux (32) sont formés dans la zone du noyau de fraise respectivement par un amincissement (38), avec lequel la face de dépouille du tranchant central (32) respectivement antérieur dans le sens de rotation est formée.

2. Outil de fraisage selon la revendication 1, **caractérisé en ce que** les tranchants centraux (32) sont en déport d'une dimension centrale arrière (NHM) prédéterminée d'un plan axial (EA) s'étendant à travers l'axe d'outil (A) et sensiblement parallèlement au tranchant central (32).

3. Outil de fraisage selon l'une quelconque des revendications 1 à 2, **caractérisé en ce que** les tranchants centraux (32) sont formés dans la zone de l'angle de coupe (30) radialement intérieur par la rainure à copeaux (34) se trouvant entre les tranchants frontaux (32).

4. Outil de fraisage selon l'une quelconque des revendications 1 à 3, **caractérisé en ce que** les tranchants frontaux (32) sont formés de telle manière que l'angle de coupe (ASW) axial soit constant comme angle que forme la tangente (T) du tranchant frontal (26) en cas d'observation dans un plan axial (EA*) avec celui-ci.

5. Outil de fraisage selon la revendication 4, **caractérisé en ce qu'**au moins deux des angles de coupe (ASW) axiaux des tranchants frontaux (26) individuels sont différents.

6. Outil de fraisage selon la revendication 4 ou 5, **caractérisé en ce que** les tranchants frontaux (26) suivent une étendue telle que dans un plan de référence se trouvant perpendiculaire à un axe central (A) de l'outil de fraisage 20 se présente une répartition égale de sorte qu'il s'applique :

$$AU = 360°/z$$

dans lequel AU signifie la distance périphérique de tranchants frontaux (26) contigus et z le nombre des tranchants frontaux (26).

7. Outil de fraisage selon la revendication 6, **caractérisé en ce que** le plan de référence se trouve dans la zone de la partie de coupe (24) ou dans la zone des tranchants frontaux (26).

8. Outil de fraisage selon l'une quelconque des revendications 4 à 7, **caractérisé en ce que** l'angle de coupe (ASW) axial se trouve dans la plage entre 18 et 25°, de préférence entre 20 et 23°.

9. Outil de fraisage selon l'une quelconque des revendications 1 à 3, **caractérisé en ce que** les tranchants frontaux (26) sont formés de telle manière que l'angle de coupe (ASW) axial augmente comme angle que forme la tangente (T) du tranchant frontal (26) en un point de référence (PB) en cas d'observation dans un plan axial (EA*) avec celui-ci, à partir de l'angle de coupe (30) radialement intérieur linéairement à la distance axiale du point de référence (PB) de l'angle de coupe (30) radialement intérieur.

10. Outil de fraisage selon la revendication 9, **caractérisé en ce que** les angles de coupe (ASW) axiaux au moins de deux tranchants frontaux (26) se distinguent l'un de l'autre au niveau de l'angle de coupe (30) radialement intérieur.

11. Outil de fraisage selon l'une quelconque des revendications 1 à 10, **caractérisé par** au moins 3, de préférence 5 tranchants frontaux (26).

12. Outil de fraisage selon l'une quelconque des revendications 1 à 11, **caractérisé en ce que** l'angle de pointe (WSK) de la surface enveloppe conique se trouve dans la plage entre 182 et 188°, de préférence dans la plage entre 183 et 185°.

13. Outil de fraisage selon l'une quelconque des revendications 1 à 12, **caractérisé en ce que** l'angle de dépouille (WFZ) des tranchants centraux (32) se trouve dans la plage entre 3 et 20°, de préférence entre 4 et 10°.

14. Outil de fraisage selon l'une quelconque des revendications 2 à 13, **caractérisé en ce que** la dimension centrale arrière (MHM) des tranchants centraux (32) se trouve dans la plage entre 0,01 et 0,03×D, de préférence entre 0,013 et 0,02×D, dans lequel D désigne le diamètre nominal (DN) de l'outil de fraisage (20).

15. Outil de fraisage selon l'une quelconque des revendications 1 à 14, **caractérisé en ce que** les rainures à copeaux (34) se trouvant entre les tranchants frontaux (26) présentent à partir de la pointe de fraise une profondeur croissant dans le sens axial.

16. Outil de fraisage selon la revendication 15, **caractérisé en ce que** le diamètre de noyau (DK) dans le plan radial au niveau de l'angle de coupe (30) intérieur se trouve dans la plage entre 0,15 et 0,19xD et au niveau de l'angle de coupe (28) radialement extérieur dans la plage entre 0,6 et 0,8×D, dans lequel D désigne le diamètre nominal de l'outil de fraisage.

17. Outil de fraisage selon l'une quelconque des revendications 1 à 16, **caractérisé en ce que** les tranchants frontaux (26) se trouvent sur la surface enveloppe (MFK) d'un cône avec un angle conique de 90°.

18. Outil de fraisage selon l'une quelconque des revendications 1 à 17, **caractérisé en ce qu'**il est formé d'un seul tenant en un matériau dur tel que du carbure monobloc (VHM), de préférence du carbure micrograins avec une grosseur de grains inférieure à 1,3 μm, de préférence inférieure à 0,8 μm.

19. Outil de fraisage selon l'une quelconque des revendications 1 à 18, **caractérisé en ce qu'**il est équipé au moins dans la zone des tranchants (26, 32) d'un revêtement, de préférence d'un revêtement en TiAlN.

Fig. 2

Fig. 1

Fig. 3 A

Fig. 3 B

Fig. 3 C

Fig. 4

BZ

32

38

Fig. 5

Fig. 10

Fig. 10 A

54

MA

52

Fig. 7

Fig. 9

Fig. 6

Fig. 8

16

Fig. 11

30

34

Fig. 12

**EP 3 791 983 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006026853 A